# EUROPÄISCHE PATENTSCHRIFT

(11) **EP 3 741 276 B1**
(45) Veröffentlichungstag und Bekanntmachung des Hinweises auf die Patenterteilung: **26.05.2021**
(21) Anmeldenummer: 20173367.2
(22) Anmeldetag: 07.05.2020
(51) Int. Cl.: A47L 9/00, F16J 15/02, F16J 15/06

(54) **STAUBSAUGER ZUR REINIGUNG VON BODENFLÄCHEN**
VACUUM CLEANER FOR CLEANING FLOORS
ASPIRATEUR DESTINÉ AU NETTOYAGE DES SOLS

(30) Priorität: 21.05.2019 DE 102019113543
(43) Veröffentlichungstag der Anmeldung: 25.11.2020
(73) Patentinhaber: Miele & Cie. KG, 33332 Gütersloh (DE)
(72) Erfinder: Mersmann, Udo, 33335 Gütersloh (DE); Fortmann, Jana, 33729 Bielefeld (DE)

(56) Entgegenhaltungen:
- DE-A1- 1 703 140
- DE-A1-102004 040 980
- DE-A1-102011 052 028
- DE-B3-102004 024 817
- JP-A- H08 196 483

## Beschreibung

Die Erfindung betrifft einen Staubsauger gemäß dem Oberbegriff von Anspruch 1.

Der Staubsauger umfasst ein Gehäuse, in dem ein Aufnahmeraum zur Aufnahme eines Schmutzsammelbeutels angeordnet ist. Der Aufnahmeraum ist mittels eines an dem Gehäuse gelagerten Gehäusedeckels verschließbar, wobei der Gehäusedeckel insbesondere um eine an dem Gehäuse ausgebildete Schwenkachse relativ zu dem Gehäuse verschwenkbar ist. Auf diese Weise ist der Gehäusedeckel zwischen einer Schließstellung und einer Offenstellung überführbar, wobei der Aufnahmeraum bei Vorliegen des Gehäusedeckels in seiner Schließstellung von einer Umgebung des Staubsaugers räumlich getrennt ist, während der Aufnahmeraum bei Vorliegen des Gehäusedeckels in seiner Offenstellung derart geöffnet ist, dass ein Zugriff auf den Aufnahmeraum - und insbesondere eine Entnahme eines gefüllten Schmutzsammelbeutels - möglich ist. Der Staubsauger verfügt ferner über eine umlaufende Dichtung, die in einem Eingriffbereich von Gehäusedeckel und Gehäuse wirkt. Die Dichtung dient dazu, den Aufnahmeraum luftdicht gegen eine Umgebung des Staubsaugers abzudichten.

Der Staubsauger kann insbesondere ein Gebläse umfassen, mittels dessen ein Unterdruck erzeugbar ist. Dieser Unterdruck wird genutzt, um einen Luftstrom zu erzeugen, mit dessen Hilfe etwaige Schmutzpartikel aufgesaugt und in Richtung des Schmutzsammelbeutels geleitet werden. Der mittels des Gebläses aufgebaute Unterdruck liegt dabei auch in dem Aufnahmeraum vor, in dem sich der Schmutzsammelbeutel befindet. Die Abdichtung des Aufnahmeraums gegen die Umgebung mittels der umlaufenden Dichtung im Eingriffbereich von Gehäusedeckel und Gehäuse ist mithin bedeutsam, damit eine mittels des Gebläses bewirkte Saugleistung des Staubsaugers zu einem möglichst großen Anteil an einem Saugvorsatz, beispielsweise einen händisch führbaren Saugrohr, angelangt.

Staubsauger der vorstehend beschriebenen Art sind im Stand der Technik bereits bekannt. Hierzu wird rein beispielhaft auf die deutsche Offenlegungsschrift DE 10 2017 119 108 A1 hingewiesen, die einen Staubsauger sowie ein Verfahren zu dessen Betrieb beschreibt.

Bei bekannten Staubsaugern hat es sich grundsätzlich als nachteilig erwiesen, dass ein lichter Querschnitt einer Öffnung des Aufnahmeraums, soweit diese bei Vorliegen des Gehäusedeckels in seiner Offenstellung freigegeben ist, relativ gering sind. Hierdurch kann das Wechseln des Schmutzsammelbeutels behindert sein, da letzterer durch die freie Öffnung des Aufnahmeraums hindurch aus dem Aufnahmeraum entnommen werden muss. Die teilweise Belegung der Öffnung kann insbesondere durch die Dichtung bedingt sein, mittels der der Aufnahmeraum gegen die Umgebung abgedichtet ist. Besagte Dichtung ist typischerweise an dem Gehäuse des Staubsaugers angeordnet, wobei der Gehäusedeckel im Zuge der Überführung von seiner Offenstellung in seine Schließstellung gegen die an dem Gehäuse befindliche Dichtung gedrückt wird, wodurch die gewünschte Dichtwirkung erzielt wird. Hierzu verfügt der Gehäusedeckel in aller Regel über entsprechende Anschlagflächen, die für den Anschlag der Dichtung zur Verfügung stehen. Die Dichtung ist dabei regelmäßig derart in dem Eingriffbereich von Gehäusedeckel und Gehäuse angeordnet, dass sie in den lichten Querschnitt der Öffnung des Aufnahmeraums hineinragt.

Die JP H08 196 483 A offenbart einen Staubsauger mit einem Gehäuse, in dem ein Aufnahmeraum zur Aufnahme eines Schmutzsammelbeutels angeordnet ist. Der Aufnahmeraum ist über einen Gehäusedeckel verschließbar, wobei im Eingriffsbereich des Gehäusedeckels und des Gehäuses eine umlaufende Dichtung zur luftdichten Abdichtung des Aufnahmeraums angeordnet ist. Diese Dichtungen weist zwei Wirkrichtungen auf.

Die DE 17 03 140 A1 offenbart einen Staubsauger mit einem mittels eines Gehäusedeckels verschließbaren Aufnahmeraumes für einen Schmutzsammelbeutel. Gehäusedeckel und Aufnahmeraum sind mittels einer Dichtungsanordnung gegeneinander abgedichtet, wobei die Dichtungsanordnung zwei Wirkrichtungen aufweist.

Der vorliegenden Anmeldung liegt nach alldem die Aufgabe zugrunde, einen Staubsauger bereitzustellen, bei dem ein leichterer Zugriff auf den Aufnahmeraum ermöglicht ist.

Die zugrunde liegende Aufgabe wird erfindungsgemäß mittels eines Staubsaugers mit den Merkmalen des Anspruchs 1 gelöst. Vorteilhafte Ausgestaltungen ergeben sich aus den Unteransprüchen 2 bis 12.

Der erfindungsgemäße Staubsauger ist dadurch gekennzeichnet, dass die Dichtung mindestens zwei Wirkabschnitte aufweist, in denen die Dichtung verschiedene Wirkrichtungen aufweist. Insbesondere kann die Dichtung mindestens einen ersten Wirkabschnitt mit einer vertikalen Wirkrichtung und/oder einen zweiten Wirkabschnitt einer horizontalen Wirkrichtung aufweisen. Die Wirkrichtung ergibt sich dabei durch das Zusammenspiel der Dichtung mit einer korrespondierenden Anschlagfläche. Bei einer horizontalen Wirkrichtung liegt ein zumindest hauptsächlich seitlicher Anschlag der Dichtung an einer Anschlagfläche vor, bei einer vertikalen Wirkrichtung analog ein zumindest hauptsächlich vertikaler Anschlag.

Die Ausgestaltung der Dichtung mit mindestens zwei Wirkabschnitten bietet die Möglichkeit, Anschlagflächen für die Dichtung anders zu gestalten, als dies im Stand der Technik der Fall ist. Insbesondere ist die Möglichkeit geschaffen, mindestens eine Anschlagfläche der Dichtung mit einer zumindest hauptsächlich vertikalen Ausrichtung zu gestalten, die daraufhin nicht in der im Stand der Technik bekannten Weise in den lichten Querschnitt der Öffnung des Aufnahmeraums hinein vorragt. Hierdurch wird der Zugriff auf den Aufnahmeraum erleichtert.

In besonders vorteilhafter Weise ist die Dichtung nicht fest an dem Gehäuse, sondern an dem Gehäusedeckel angeordnet, sodass die Dichtung im Zuge der Überführung des Gehäusedeckels von seiner Schließstellung in seiner Offenstellung gemeinsam mit dem Gehäusedeckel verschwenkt wird. Dies hat zur Folge, dass die Dichtung als solche bei Vorliegen des Gehäusedeckels in dessen Offenstellung den lichten Querschnitt der Öffnung des Aufnahmeraums nicht beeinträchtigen kann.

Grundsätzlich ist es ebenso denkbar, dass die Dichtung des erfindungsgemäßen Staubsaugers vergleichbar zum Stand der Technik fest an dem Gehäuse angeordnet ist und sich folglich nicht gemeinsam mit dem Gehäusedeckel relativ zu dem Gehäuse bewegt. Bei dieser Ausgestaltung kann die Dichtung aufgrund ihrer erfindungsgemäßen Ausgestaltung mit mindestens zwei Wirkabschnitten beispielsweise zumindest teilweise in eine Aufnahmenut eingelegt sein, sodass sie mit einer zumindest im Wesentlichen vertikalen Anschlagfläche, die an dem Gehäusedeckel ausgebildet ist, zusammenwirken kann. Auf diese Weise ist vermieden, dass die Dichtung trotz ihrem Verbleib an dem Gehäuse in hinderlicher Weise in den lichten Querschnitt der Öffnung des Aufnahmeraums hinein vorsteht.

Die Ausgestaltung mindestens eines Wirkabschnitts der Dichtung mit einer vertikalen Wirkrichtung hat den besonderen Vorteil, dass in einem solchen Wirkabschnitt die Dichtwirkung der Dichtung während eines Betriebs des Staubsaugers sich selbst verstärkt. Dies liegt darin begründet, dass der Gehäusedeckel im Zuge der Erzeugung eines Unterdrucks mittels des Gebläses des Staubsaugers angesaugt wird, woraufhin die Dichtung gegen die jeweilig korrespondierende Anschlagfläche gedrückt bzw. gezogen wird. Hierdurch erhöht sich die Dichtwirkung der Dichtung. Entsprechend ist eine Dichtung mit mindestens einem Wirkabschnitt mit vertikaler Wirkrichtung vorteilhaft.

Der Vorteil der Vermeidung eines in den lichten Querschnitt der Öffnung des Aufnahmeraums vorstehenden Bauteils - sei es die Dichtung selbst oder eine dafür vorgesehene Anschlagfläche - ist insbesondere in einem in Richtung einer Längsachse des Staubsaugers betrachtet hinteren Abschnitt des Eingriffbereichs vorteilhaft. In einem vorderen Bereich des Eingriffbereichs, der einem vorderen Ende des Staubsaugers zugeordnet ist, ist der Platzbedarf, der für ein komfortables Handling des Schmutzsammelbeutels erforderlich ist, typischerweise weniger relevant als an dem hinteren Abschnitt des Eingriffbereichs, der einem hinteren Ende des Staubsaugers zugeordnet ist. Mithin ist eine solche Ausgestaltung von besonderem Vorteil, bei der ein Wirkabschnitt mit horizontaler Wirkrichtung dem beschriebenen hinteren Abschnitt des Eingriffbereichs zugeordnet ist. Zwecks Beibehaltung des beschriebenen Vorteils der sich "selbst verstärkenden" Dichtung kann es dabei besonders vorteilhaft sein, wenn die Dichtung in den übrigen Abschnitten des Eingriffbereichs, das heißt insbesondere in seitlichen, zumindest im Wesentlichen parallel zu der Längsachse des Staubsaugers verlaufenden Abschnitten, sowie dem beschriebenen vorderen Abschnitt des Eingriffbereichs einen Wirkabschnitt aufweist, in dem die Dichtung eine vertikale Wirkrichtung aufweist.

Den erfindungsgemäßen Staubsauger weiter ausgestaltend ist die Dichtung einstückig ausgebildet, wobei die Dichtung insbesondere in Form einer endlosen Dichtung ausgeführt ist, die den Eingriffabschnitt von Gehäusedeckel und Gehäuse umlaufend abdichten kann.

Im Zusammenhang mit einer solchen einstückigen Dichtung, jedoch grundsätzlich auch unabhängig von dieser Ausbildung, kann es besonders vorteilhaft sein, wenn die Dichtung einen im Querschnitt U-förmigen Grundkörper sowie mindestens eine sich ausgehend von dem Grundkörper erstreckende Dichtlippe aufweist. Der U-förmige Grundkörper ist besonders gut geeignet, um die Dichtung an einem entsprechend ausgebildeten Aufnahmebereich des jeweiligen Bauteils anzuordnen, an dem die Dichtung angeordnet werden soll. Dies betrifft insbesondere das Gehäuse oder den Gehäusedeckel, wie vorstehend bereits ausgeführt ist. Die Anordnung der Dichtlippe an dem Grundkörper bewirkt derweil wesentlich die Dichtwirkung der Dichtung. Somit erstreckt sich die Dichtlippe vorzugsweise an der Seite des Grundkörpers, an der die Dichtung mit einer korrespondierenden Anschlagfläche zusammenwirken soll bzw. zusammenwirkt. Auf diese Weise kann mittels einer gezielten Anordnung der Dichtlippe relativ zu dem Grundkörper die Wirkrichtung der Dichtung festgelegt werden.

In einer besonders vorteilhaften Ausgestaltung erstreckt sich die Dichtlippe in einem Wirkabschnitt der Dichtung, in dem diese eine vertikale Wirkrichtung aufweist, an einer Basis des Grundkörpers, während die Dichtlippe in einem Wirkabschnitt mit horizontaler Wirkrichtung einen seitlichen Steg des Grundkörpers zugeordnet ist. Die Anordnung der Dichtlippe relativ zu dem Grundkörper kann sich bei einer besonders vorteilhaften Ausgestaltung entlang einer Mittelachse der Dichtung verändern, vorzugsweise stetig bzw. kontinuierlich verändern. Somit ist eine solche Dichtung besonders vorteilhaft, die mindestens einen Übergangsabschnitt aufweist, der zwischen zwei Wirkabschnitten angeordnet ist, wobei sich die Wirkrichtung der Dichtung in dem Übergangsabschnitt ausgehend von der in dem ersten angrenzenden Wirkabschnitt vorliegenden Wirkrichtung zu der in dem zweiten angrenzenden Wirkabschnitt vorliegenden Wirkrichtung verändert. Am Beispiel einer Dichtung, die einen ersten Wirkabschnitt mit einer vertikalen Wirkrichtung und einen zweiten Wirkabschnitt mit einer horizontalen Wirkrichtung aufweist, ist es somit denkbar, dass die Dichtung einen Grundkörper mit einer sich davon ausgehend erstreckenden Dichtlippe aufweist, die in dem Wirkabschnitt mit vertikaler Wirkrichtung einer unteren Basis des Grundkörpers und in dem Wirkabschnitt mit der horizontalen Wirkrichtung einem seitlichen Steg des Grundkörpers zugeordnet ist. In einem sich zwischen den Wirkabschnitten befindlichen Übergangsabschnitt "wandert" die Dichtlippe folglich gewissermaßen entlang dem Grundkörper, sodass sich die Wirkrichtung der Dichtung in dem Übergangsabschnitt kontinuierlich von der Wirkrichtung des einen Wirkabschnitts hin zu der Wirkrichtung des anderen Wirkabschnitts verändert. Eine entsprechende Ausgestaltung ist auch dem nachfolgenden Ausführungsbeispiel entnehmbar.

Den erfindungsgemäßen Staubsauger weiter ausgestaltend ist der Gehäusedeckel um eine Schwenkachse relativ zu dem Gehäuse verschwenkbar an dem Gehäuse gelagert. Vorzugsweise ist die Schwenkachse horizontal sowie quer zu der Längsachse des Staubsaugers orientiert. Die Schwenkachse ist dabei - in einem vertikalen Längsschnitt des Staubsaugers betrachtet - vertikal oberhalb sowie horizontal seitlich von einem Wirkabschnitt der Dichtung angeordnet, der eine horizontale Wirkrichtung aufweist. Diese Anordnung der Schwenkachse hat den Vorteil, dass der Gehäusedeckel im Zuge der Überführung in seine Schließstellung in dem Eingriffbereich von Gehäusedeckel und Gehäuse, der mit dem Wirkabschnitt mit der horizontalen Wirkrichtung korrespondiert, eine horizontale Bewegungskomponente aufweist. Dies liegt darin begründet, dass sich die entsprechende Stelle des Gehäusedeckels auf einer Kreisbahn um die Schwenkachse bewegt, sodass die besagte Stelle aufgrund der Anordnung der Schwenkachse oberhalb sowie neben dem genannten Wirkabschnitt zusätzlich zu einem vertikalen Bewegungsanteil auch einen horizontalen Bewegungsanteil aufweist, wenn der Gehäusedeckel in seine Schließstellung überführt wird. Insbesondere der horizontale Bewegungsanteil bietet den technischen Effekt, dass die Dichtung unabhängig davon, ob sie an dem Gehäusedeckel selbst oder an dem Gehäuse angeordnet ist, im Zuge der Überführung des Gehäusedeckels in dessen Schließstellung zumindest ein Stück weit in horizontale Richtung gedrückt wird, wodurch die Dichtwirkung der Dichtung erhöht wird. Vorteilhafterweise ist die Dichtung dem Gehäusedeckel zugeordnet, sodass die Dichtung beim Schließen des Gehäusedeckels mit ihren Wirkabschnitt mit horizontaler Wirkrichtung gegen die korrespondierende Anschlagfläche des Gehäuses gedrückt und dabei komprimiert wird.

Ein Ausführungsbeispiel der Erfindung ist in den Zeichnungen rein schematisch dargestellt und wird nachfolgend näher beschrieben. Es zeigt:
- Figur 1: Eine schematische Darstellung eines bekannten Staubsaugers,
- Figur 2: Ein vertikaler Längsschnitt durch einen nicht-erfindungsgemäßen Staubsauger,
- Figur 3: Ein vertikaler Längsschnitt durch einen erfindungsgemäßen Staubsauger,
- Figur 4: Eine Draufsicht auf eine Dichtung des Staubsaugers gemäß Figur 3,
- Figur 5: Drei Querschnitte durch die Dichtung gemäß Figur 4,
- Figur 6: Eine perspektivische Ansicht der Dichtung gemäß Figur 4 und
- Figur 7: Ein Detail eines Übergangsabschnitt der Dichtung gemäß Figur 4.

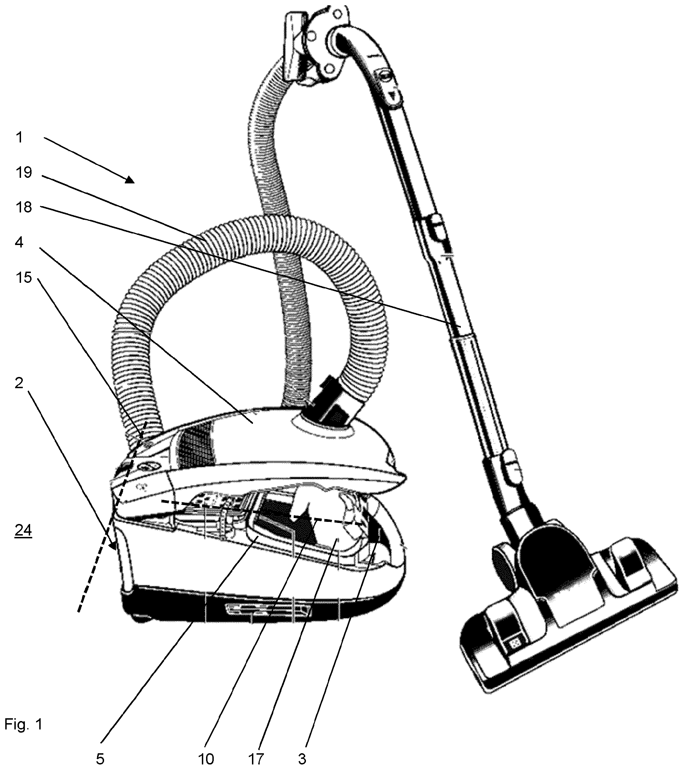

Ein handelsüblicher Staubsauger, der in Figur 1 dargestellt ist, umfasst ein Gehäuse 2, einen darin angeordneten Aufnahmeraum 3 zur Aufnahme eines Schmutzsammelbeutels 17 sowie einen Gehäusedeckel 4. Der Gehäusedeckel 4 ist hier um eine Schwenkachse 15 relativ zu dem Gehäuse 2 verschwenkbar, sodass er zwischen einer Offenstellung und einer Schließstellung überführbar ist. Bei Vorliegen des Gehäusedeckels 4 in seiner Offenstellung ist es möglich, den Schmutzsammelbeutel 17 aus dem Aufnahmeraum 3 durch eine freigegebene Öffnung 22 des Aufnahmeraums 3 hindurch zu entnehmen. Der Staubsauger 1 ist hier ferner mit einem Saugrohr 19 sowie einem daran angeordneten Saugvorsatz 18 ausgestattet.

Der bekannte Staubsauger 1 verfügt über eine Dichtung 6, die in einem Eingriffbereich 5 von Gehäusedeckel 4 und Gehäuse 2 wirkt. Diese Dichtung 6 bewirkt, dass der Aufnahmeraum 3 luftdicht gegen eine Umgebung 24 des Staubsaugers 1 abgedichtet ist, sodass ein Luftstrom, der mittels eines in den Figuren nicht dargestellten Gebläses erzeugt wird, planmäßig nur durch das Saugrohr 18 hindurch möglich ist.

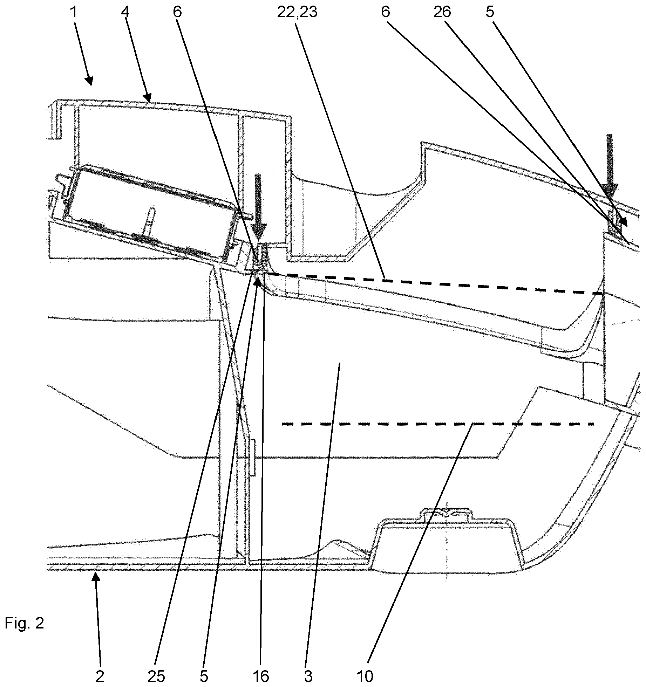

Eine Möglichkeit, die Dichtung 6 in dem Eingriffbereich 5 wirken zu lassen, besteht darin, die Dichtung 6 an dem Gehäusedeckel 4 anzuordnen. Hierbei ist es erforderlich, dass an dem Gehäuse 2 entsprechende Anschlagflächen 25, 26 vorhanden sind, an denen die Dichtung 6 anschlagen kann, um ihre gewünschte Dichtwirkung zu erhalten, sobald der Gehäusedeckel 4 in seiner Schließstellung vorliegt. Bei Verwendung einer Dichtung 6 mit einem Wirkabschnitt, der eine vertikale Wirkrichtung aufweist, führt dies dazu, dass an dem Gehäuse 2 zumindest hauptsächlich horizontal orientierte Anschlagflächen vorgehalten werden müssen. Eine derartige nicht erfindungsgemäße Ausgestaltung eines Staubsaugers 1 ist beispielhaft in Figur 2 dargestellt. Dort ist besonders gut erkennbar, dass in einem hinteren Abschnitt des Eingriffbereichs 5, der sich in Richtung der Längsachse 10 des Staubsaugers 1 betrachtet an einem hinteren Ende der Öffnung 22 befindet, ein Anschlagkragen 16 in einen lichten Querschnitt 23 der Öffnung 22 hinein vorsteht. Der Anschlagkragen 16 führt mithin dazu, dass der lichte Querschnitt 23 verkleinert ist, wodurch ein Zugriff auf den Aufnahmeraum 3 von der Umgebung 24 her erschwert ist.

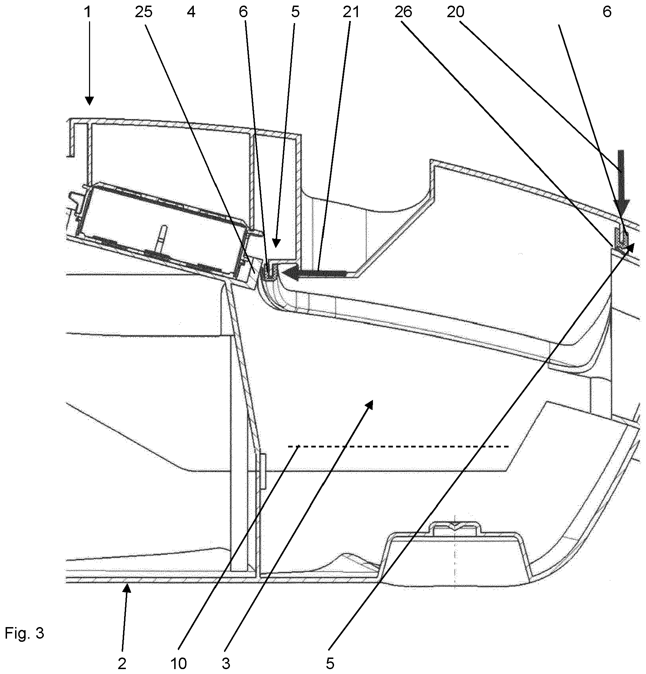

Erfindungsgemäß ist daher vorgesehen, dass die Dichtung 6 mit mindestens zwei Wirkabschnitten 7, 8 ausgestattet ist. Ein erfindungsgemäßer Staubsauger 1 mit einer solchen Dichtung 6 ist in den Figuren 3 bis 7 veranschaulicht. Die Dichtung 6 ist hier an dem Gehäusedeckel 4 angeordnet, sodass die Dichtung 6 gemeinsam mit dem Gehäusedeckel 4 um die Schwenkachse 15 verschwenkt wird, wenn der Gehäusedeckel 4 zwischen seiner Offenstellung und seiner Schließstellung bewegt wird. In einem ersten Wirkabschnitt 7 der Dichtung 6, in dem diese eine vertikale Wirkrichtung aufweist, schlägt die Dichtung 6 an einer zumindest hauptsächlich horizontalen Anschlagfläche 26 an, die an dem Gehäuse 2 ausgebildet ist. Die vertikale Wirkrichtung der Dichtung 6 in ihrem ersten Wirkabschnitt 7 ist in Figur 3 mittels des dortigen Pfeils 20 veranschaulicht. In einem zweiten Wirkabschnitt 8 der Dichtung 6 weist diese eine horizontale Wirkrichtung auf, die in Figur 3 mittels eines Pfeils 21 veranschaulicht ist. Hierbei schlägt die Dichtung 6 an eine rückwärtige, zumindest hauptsächlich vertikal orientierte Anschlagfläche 25 an, wobei eine Dichtlippe 12 der Dichtung 6 gegen die Anschlagfläche 25 gedrückt ist. Wie sich besonders gut anhand des Vergleichs des erfindungsgemäßen Staubsaugers 1 gemäß Figur 3 mit dem nicht-erfindungsgemäßen Staubsauger 1 gemäß Figur 2 ergibt, entfällt bei dem erfindungsgemäßen Staubsauger 1 der an dem Gehäuse 2 ausgebildete Anschlagkragen 16, der sich in den lichten Querschnitt 23 der Öffnung 22 hinein erstreckt und auf diese Weise den Zugriff auf den Aufnahmeraum 3 erschwert.

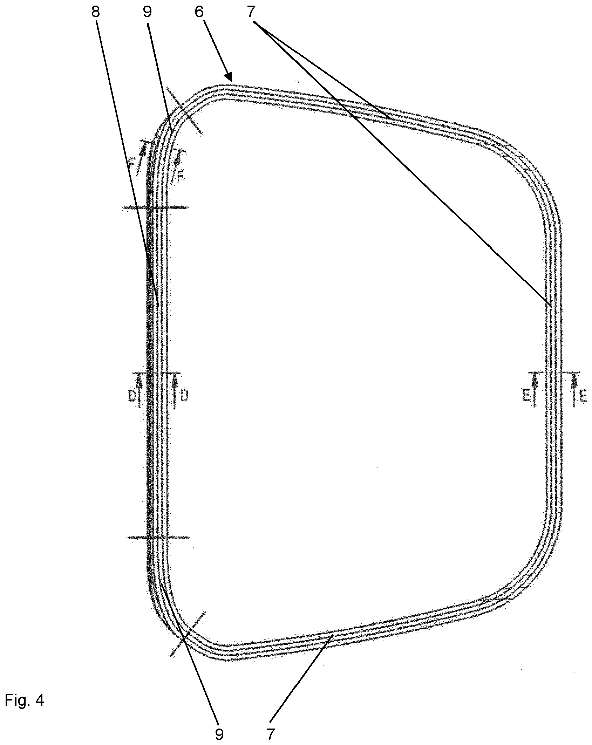

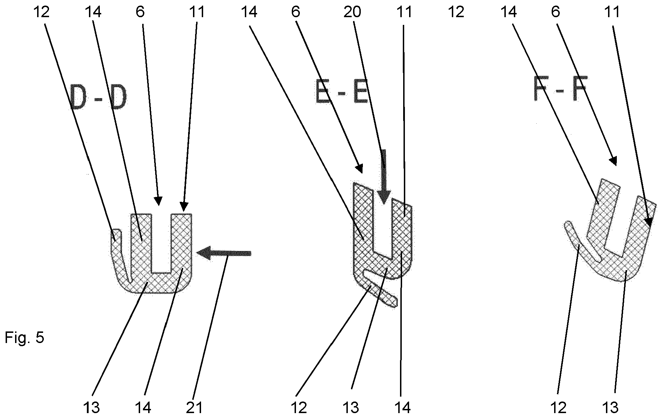

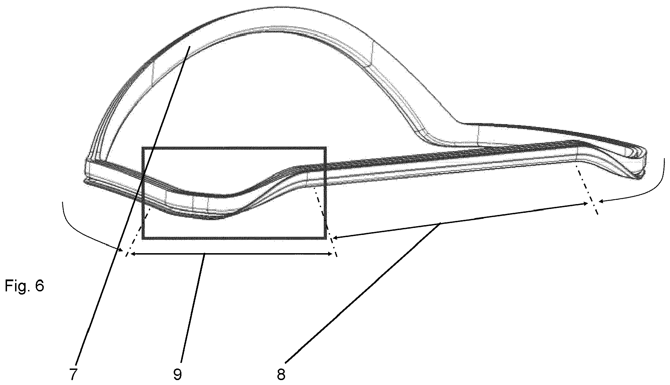

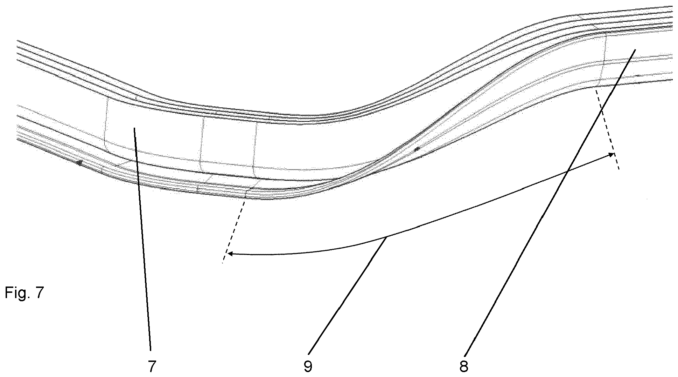

Die Dichtung 6 ist in dem gezeigten Beispiel einstückig ausgebildet, wobei die Dichtung 6 von einer an dem Eingriffbereich 5 umlaufenden endlosen Dichtung gebildet ist. Dies ergibt sich besonders gut anhand der Figuren 4 und 6. Die Dichtung 6 umfasst hier neben den beiden Wirkabschnitten 7, 8 zudem zwei Übergangsabschnitte 9, mit denen der Wirkabschnitt 8 mit der horizontalen Wirkrichtung zu beiden Enden hin von dem Wirkabschnitt 7 mit der vertikalen Wirkrichtung getrennt ist. Die Dichtung 6 weist in dem gezeigten Beispiel einen U-förmigen Grundkörper 11 auf, der eine untere Basis 13 sowie zwei einander gegenüberliegende, sich jeweils von den Enden der Basis 13 aus erstreckende Stege 14 aufweist. Ferner umfasst die Dichtung 6 die bereits genannte Dichtlippe 12, die sich ausgehend von dem Grundkörper 11 erstreckt. In den verschiedenen Wirkabschnitten 7, 8 der Dichtung 6 ist die Dichtlippe 12 verschiedenen Seiten des Grundkörpers 11 zugeordnet. Somit erstreckt sich die Dichtlippe 12 in dem zweiten Wirkabschnitt 8 mit horizontaler Wirkrichtung entlang eines der seitlichen Stege 14 des Grundkörpers 11, sodass die Dichtung 6 in horizontale Richtung entsprechend Pfeil 21 gegen eine korrespondierende Anschlagfläche gedrückt werden kann und hierdurch die gewünschte Dichtwirkung erzielt. Umgekehrt erstreckt sich die Dichtlippe 12 in dem ersten Wirkabschnitt 7 mit vertikaler Wirkrichtung an der unteren Basis 13 der Dichtung 6, sodass die Dichtung 6 in vertikale Richtung entsprechend Pfeil 20 gegen eine korrespondierende Anschlagfläche gedrückt werden kann. In den Übergangsbereichen 9 "wandert" die Dichtlippe 12 gewissermaßen von der einen Position an dem Grundkörper 11 hin zu der anderen Position. Hierbei wird die Wirkrichtung der Dichtung 6 in dem gezeigten Beispiel im Übergangsbereich 9 kontinuierlich verändert, wie sich besonders gut anhand der Darstellungen gemäß den Figuren 6 und 7 ergibt. Mithin dreht sich die Dichtlippe 12 über eine Länge eines jeweiligen Übergangsbereichen 9 hinweg von ihrer unteren, der Basis 13 zugeordneten Position hin zu ihrer seitlichen, einem der Stege 14 zugeordneten Position bzw. umgekehrt. Dies ist anhand der in Figur 5 dargestellten Schnitte der Dichtung 6 besonders gut nachvollziehbar.

Alternativ zu der hier gezeigten Ausführungsform des erfindungsgemäßen Staubsaugers 1 ist es grundsätzlich ebenso denkbar, die Dichtung 6 fest an dem Gehäuse 2 anzuordnen. Insbesondere in einem hinteren Abschnitt des Eingriffbereichs 5, der in Richtung der Längsachse 10 betrachtet einem hinteren Ende des Aufnahmeraums 3 zugeordnet ist, könnte die Dichtung 6 dabei in eine Aufnahmenut eingesetzt sein, sodass die Dichtung 6 anders als im Stand der Technik nicht in den lichten Querschnitt 23 der Öffnung 22 vorragt und dadurch den Zugriff auf den Aufnahmeraum 3 erschwert. Die zugehörige Anschlagfläche für die Dichtung 6 müsste bei einer solchen Ausgestaltung entsprechend an dem Gehäusedeckel 4 angeordnet sein.

### Bezugszeichenliste

- 1: Staubsauger
- 2: Gehäuse
- 3: Aufnahmeraum
- 4: Gehäusedeckel
- 5: Eingriffbereich
- 6: Dichtung
- 7: Wirkabschnitt
- 8: Wirkabschnitt
- 9: Übergangsabschnitt
- 10: Längsachse
- 11: Grundkörper
- 12: Dichtlippe
- 13: Basis
- 14: Steg
- 15: Schwenkachse
- 16: Anschlagkragen
- 17: Schmutzsammelbeutel
- 18: Saugvorsatz
- 19: Saugrohr
- 20: Pfeil
- 21: Pfeil
- 22: Öffnung
- 23: Querschnitt
- 24: Umgebung
- 25: Anschlagfläche
- 26: Anschlagfläche

## Patentansprüche

1. Staubsauger (1) zur Reinigung von Bodenflächen, umfassend
- ein Gehäuse (2),
- einen in dem Gehäuse (2) angeordneten Aufnahmeraum (3) zur Aufnahme eines Schmutzsammelbeutels,
- einen dem Aufnahmeraum (3) zugeordneten Gehäusedeckel (4) sowie
- mindestens eine in einem Eingriffbereich (5) von Gehäusedeckel (4) und Gehäuse (2) umlaufende Dichtung (6) zur luftdichten Abdichtung des Aufnahmeraums (3) gegen eine Umgebung (24) des Staubsaugers (1),
wobei der Gehäusedeckel (4) zwischen einer eine Öffnung (22) des Aufnahmeraums (3) verschließenden Schließstellung und einer die Öffnung (22) des Aufnahmeraum (3) freigebenden Offenstellung überführbar ist,
**dadurch gekennzeichnet, dass**
die Dichtung (6) mindestens zwei Wirkabschnitte (7, 8) aufweist, in denen die Dichtung (6) verschiedene Wirkrichtungen aufweist, die Dichtung (6) mindestens einen zwischen zwei Wirkabschnitten (7, 8) befindlichen Übergangsabschnitt (9) aufweist, wobei sich die Wirkrichtung der Dichtung (6) in dem Übergangsabschnitt (9) ausgehend von der in dem ersten Wirkabschnitt (7) vorliegenden Wirkrichtung hin zu der in dem zweiten Wirkabschnitt (8) vorliegenden Wirkrichtung, vorzugsweise kontinuierlich, verändert.

2. Staubsauger (1) nach Anspruch 1, **dadurch gekennzeichnet, dass** die Dichtung (6) in einem ersten Wirkabschnitt (7) eine vertikale Wirkrichtung aufweist.

3. Staubsauger (1) nach Anspruch 1 oder 2, **dadurch gekennzeichnet, dass** die Dichtung (6) in einem zweiten Wirkabschnitt (8) eine horizontale Wirkrichtung aufweist.

4. Staubsauger (1) nach einem der Ansprüche 1 bis 3, **dadurch gekennzeichnet, dass** die Dichtung (6) fest an dem Gehäusedeckel (4) angeordnet ist.

5. Staubsauger (1) nach einem der Ansprüche 1 bis 4, **dadurch gekennzeichnet, dass** ein Wirkabschnitt (8), in dem die Dichtung eine horizontale Wirkrichtung aufweist, einem in Richtung einer Längsachse (10) des Staubsaugers (1) betrachtet hinteren Abschnitt des Eingriffbereichs (5) zugeordnet ist.

6. Staubsauger (1) nach einem der Ansprüche 1 bis 5, **dadurch gekennzeichnet, dass** ein Wirkabschnitt (7), in dem die Dichtung eine vertikale Wirkrichtung aufweist, einem in Richtung einer Längsachse (10) des Staubsaugers (1) betrachtet vorderen Abschnitt des Eingriffbereichs (5) zugeordnet ist.

7. Staubsauger (1) nach einem der Ansprüche 1 bis 6, **dadurch gekennzeichnet, dass** die Dichtung (6) einen im Querschnitt U-förmigen Grundkörper (11) sowie mindestens eine sich ausgehend von dem Grundkörper (11) erstreckende Dichtlippe (12) aufweist.

8. Staubsauger (1) nach Anspruch 7, **dadurch gekennzeichnet, dass** die Dichtlippe (12) in verschiedenen Wirkabschnitten (7, 8) der Dichtung (6) an verschiedenen Seiten des Grundkörpers (11) verläuft, wobei vorzugsweise die Dichtlippe (12) in einem Wirkabschnitt (7) mit vertikaler Wirkrichtung der Dichtung (6) einer Basis (13) des Grundkörpers (11) und in einem Wirkabschnitt (8) mit horizontaler Wirkrichtung der Dichtung (6) einem seitlichen Steg (14) des Grundköpers (11) zugeordnet ist.

9. Staubsauger (1) nach einem der Ansprüche 1 bis 8, **dadurch gekennzeichnet, dass** die Dichtung (6) einstückig ausgebildet ist.

10. Staubsauger (1) nach einem der Ansprüche 1 bis 9, **dadurch gekennzeichnet, dass** der Gehäusedeckel (4) um eine Schwenkachse (15) relativ zu dem Gehäuse (2) verschwenkbar an dem Gehäuse (2) gelagert ist, wobei vorzugsweise die Schwenkachse (15) horizontal sowie quer zu einer Längsachse (10) des Staubsaugers (1) orientiert ist, wobei die Schwenkachse (15) - in einem vertikalen Längsschnitt des Staubsaugers (1) betrachtet - vertikal oberhalb sowie horizontal seitlich von mindestens einem Wirkabschnitt (8) der Dichtung mit horizontaler Wirkrichtung angeordnet ist.

11. Staubsauger (1) nach einem der Ansprüche 1 bis 10, **dadurch gekennzeichnet, dass** der Eingriffbereich (5) von dem Gehäusedeckel (4) und dem Gehäuse (2) frei von einem in den Aufnahmeraum (3) vorragenden Anschlagkragen (16) ist.

## Claims

1. Vacuum cleaner (1) for cleaning floor surfaces, comprising
- a housing (2),
- a receiving chamber (3) arranged in the housing (2) for receiving a dirt collection bag,
- a housing cover (4) associated with the receiving chamber (3) and
- at least one circumferential seal (6) in an engagement region (5) of the housing cover (4) and housing (2), which seal is intended to seal the receiving chamber (3) from the surroundings (24) of the vacuum cleaner (1) in an airtight manner,
it being possible to transfer the housing cover (4) between a closed position which closes an opening (22) of the receiving chamber (3) and an open position which releases the opening (22) of the receiving chamber (3), **characterised in that** the seal (6) has at least two active portions (7, 8) in which the seal (6) has different active directions, and the seal (6) has at least one transition portion (9) located between two active portions (7, 8), the active direction of the seal (6) being changed, preferably continuously, in the transition portion (9), from the active direction present in the first active portion (7) to the active direction present in the second active portion (8).

2. Vacuum cleaner (1) according to claim 1, **characterised in that** the seal (6) has a vertical active direction in a first active portion (7).

3. Vacuum cleaner (1) according to either claim 1 or claim 2, **characterised in that** the seal (6) has a horizontal active direction in a second active portion (8).

4. Vacuum cleaner (1) according to any of claims 1 to 3, **characterised in that** the seal (6) is fixedly arranged on the housing cover (4).

5. Vacuum cleaner (1) according to any of claims 1 to 4, **characterised in that** an active portion (8) in which the seal has a horizontal active direction is associated with a rear portion of the engagement region (5), as viewed in the direction of a longitudinal axis (10) of the vacuum cleaner (1).

6. Vacuum cleaner (1) according to any of claims 1 to 5, **characterised in that** an active portion (7) in which the seal has a vertical active direction is associated with a front portion of the engagement region (5), as viewed in the direction of a longitudinal axis (10) of the vacuum cleaner (1).

7. Vacuum cleaner (1) according to any of claims 1 to 6, **characterised in that** the seal (6) has a main body (11) having a U-shaped cross section and at least one sealing lip (12) extending from the main body (11).

8. Vacuum cleaner (1) according to claim 7, **characterised in that** the sealing lip (12) extends in different active portions (7, 8) of the seal (6) on different sides of the main body (11), the sealing lip (12) preferably being associated with a base (13) of the main body (11) in an active portion (7) that has a vertical active direction of the seal (6) and being associated with a lateral projection (14) of the main body (11) in an active portion (8) that has a horizontal active direction of the seal (6).

9. Vacuum cleaner (1) according to any of claims 1 to 8, **characterised in that** the seal (6) is formed as one piece.

10. Vacuum cleaner (1) according to any of claims 1 to 9, **characterised in that** the housing cover (4) is mounted on the housing (2) so as to be pivotable relative to the housing (2) about a pivot axis (15), the pivot axis (15) preferably being oriented horizontally and transversely to a longitudinal axis (10) of the vacuum cleaner (1), and the pivot axis (15) being arranged, as viewed in a vertical longitudinal section of the vacuum cleaner (1), vertically above and horizontally to the side of at least one active portion (8) of the seal that has a horizontal active direction.

11. Vacuum cleaner (1) according to any of claims 1 to 10, **characterised in that** the engagement region (5) of the housing cover (4) and the housing (2) is free from a stop collar (16) protruding into the receiving chamber (3).

## Revendications

1. Aspirateur (1) permettant de nettoyer des surfaces de sol, comprenant
- un boîtier (2),
- un espace de réception (3) disposé dans le boîtier (2) et permettant de recevoir un sac de collecte de saletés,
- un couvercle de boîtier (4) associé à l'espace de réception (3) et
- au moins un joint (6) circonférentiel dans une zone de mise en prise (5) du couvercle de boîtier (4) et du boîtier (2) et permettant d'assurer l'étanchéité à l'air de l'espace de réception (3) par rapport à l'environnement (24) de l'aspirateur (1),
le couvercle de boîtier (4) pouvant être déplacé entre une position fermée fermant une ouverture (22) de l'espace de réception (3) et une position ouverte libérant l'ouverture (22) de l'espace de réception (3),
**caractérisé en ce que**
le joint (6) présente au moins deux sections actives (7, 8) dans lesquelles le joint (6) présente des directions actives différentes, le joint (6) présentant au moins une section de transition (9) située entre deux sections actives (7, 8), la direction active du joint (6) dans la section de transition (9) étant modifiée, de préférence en continu, depuis la direction active présente dans la première section active (7) jusqu'à la direction active présente dans la seconde section active (8).

2. Aspirateur (1) selon la revendication 1, **caractérisé en ce que** le joint (6) présente une direction active verticale dans une première section active (7).

3. Aspirateur (1) selon la revendication 1 ou 2, **caractérisé en ce que** le joint (6) présente une direction active horizontale dans une seconde section active (8).

4. Aspirateur (1) selon l'une des revendications 1 à 3, **caractérisé en ce que** le joint (6) est disposé de manière fixe sur le couvercle de boîtier (4).

5. Aspirateur (1) selon l'une des revendications 1 à 4, **caractérisé en ce qu'**une section active (8), dans laquelle le joint présente une direction active horizontale, est associée à une section arrière de la zone de mise en prise (5) vue dans la direction d'un axe longitudinal (10) de l'aspirateur (1).

6. Aspirateur (1) selon l'une des revendications 1 à 5, **caractérisé en ce qu'**une section active (7), dans laquelle le joint présente une direction active verticale, est associée à une section avant de la zone de mise en prise (5) vue dans la direction d'un axe longitudinal (10) de l'aspirateur (1).

7. Aspirateur (1) selon l'une des revendications 1 à 6, **caractérisé en ce que** le joint (6) présente un corps de base (11) comportant une section transversale en forme de U ainsi qu'au moins une lèvre d'étanchéité (12) s'étendant depuis le corps de base (11).

8. Aspirateur (1) selon la revendication 7, **caractérisé en ce que** la lèvre d'étanchéité (12) s'étend dans différentes sections actives (7, 8) du joint (6) sur différents côtés du corps de base (11), la lèvre d'étanchéité (12), dans une section active (7) comportant une direction active verticale du joint (6), étant de préférence associée à une base (13) du corps de base (11) et, dans une section active (8) comportant une direction active horizontale du joint (6), à une entretoise latérale (14) du corps de base (11).

9. Aspirateur (1) selon l'une des revendications 1 à 8, **caractérisé en ce que** le joint (6) est réalisé d'une seule pièce.

10. Aspirateur (1) selon l'une des revendications 1 à 9, **caractérisé en ce que** le couvercle de boîtier (4) est monté sur le boîtier (2) de manière à pouvoir pivoter autour d'un axe de pivotement (15) par rapport au boîtier (2), l'axe de pivotement (15) étant orienté de préférence horizontalement ainsi que transversalement à un axe longitudinal (10) de l'aspirateur (1), l'axe de pivotement (15), vu dans une coupe longitudinale verticale de l'aspirateur (1), étant disposé verticalement au-dessus et horizontalement latéralement par rapport à au moins une section active (8) du joint comportant une direction active horizontale.

11. Aspirateur (1) selon l'une des revendications 1 à 10, **caractérisé en ce que** la zone de mise en prise (5) du couvercle de boîtier (4) et du boîtier (2) est exempte d'un rebord de butée (16) faisant saillie dans l'espace de réception (3).
